# EUROPEAN PATENT APPLICATION

(11) **EP 3 940 348 A1**
(43) Date of publication of application: **19.01.2022**
(21) Application number: 21184154.9
(22) Date of filing: 07.07.2021
(51) Int. Cl.: G01G 19/08

(54) **TRANSLIFTER AND METHOD FOR DETERMINING LOAD OF CARGO**

(30) Priority: 15.07.2020 FI 20205754
(71) Applicant: NT Liftec Oy, 33980 Pirkkala (FI)
(72) Inventor: Ukkonen, Raimo, 33980 Pirkkala (FI); Olli, Henri, 33980 Pirkkala (FI)
(74) Representative: Papula Oy

(57) **Abstract**

A translifter and method of determining load of cargo transported on the translifter. The translifter (1) comprises a chassis (5) provided with wheels (7) and a lifting mechanism (12). The translifter can be connected to a separate hauling vehicle (2) by means of a draw bar (8) and a coupling device (10) which is located at a distal end of the draw bar. The translifter is further provided with at least two load sensing devices (S1, S2) for determining load of the cargo (3). The load sensing devices are located at a longitudinal (A) distance from each other.

## Description

### Background of the invention

The invention relates to a translifter for transporting cargo. The translifter can be coupled to a separate hauling vehicle for moving the cargo between desired locations. The translifter is driven under a load platform and is then lifted with a lifting mechanism for the duration of the transport.

The invention further relates to a method of determining load of cargo transported on a translifter.

The field of the invention is defined more specifically in the preambles of the independent claims.

Translifters are used in various applications for transporting cargo. The cargo is lifted by means of a lifting device of the translifter for the duration of the transport. There is a need to know weight of the handled cargo for several different purposes. In order to determine load of the cargo, it is previously known to provide a hauling vehicle and the translifter with measuring devices. Documents US5167289A, US5780782A, US2007296173A1 and US2017314986A1 disclose some vehicles provided with different measuring devices. However, the present solutions have shown to include some disadvantages.

### Brief description of the invention

An object of the invention is to provide a novel and improved translifter and method for determining load of cargo transported on the translifter.

The translifter according to the invention is characterized by the characterizing features of a first independent apparatus claim.

The method according to the invention is characterized by the charactering features and steps of an independent method claim.

An idea of the disclosed solution is that a translifter is provided with two or more load sensing devices. The load sensing devices are located at a known distance from each other when seen in longitudinal direction of the translifter. The load sensing devices generate load sensing data and load of the cargo can be calculated in one or more control units in response to received sensing data.

An advantage of the disclosed solution is that the load of the cargo can be determined on a translifter by means of on-board load sensing devices. There are various suitable locations on the translifter for mounting the sensors and several alternative sensing techniques which can be implemented. Thus, the sensing can be executed in the translifter in a versatile manner.

A further advantage is that the disclosed solution may be durable, inexpensive and requires no maintenance.

According to an embodiment, the disclosed translifter and method can be utilized in shipyards, ports, terminals, heavy engineering works, steel distribution centers, concrete element industry, sawmills, building element manufacturing etc. Ro-ro ports and terminals are perhaps the most typical places where the translifters are used for transporting ro-ro cargo.

According to an embodiment, a translifter is a wheeled trailer which is intended to be driven under a load platform loaded with a cargo where after a chassis of the trailer can be lifted with a lifting mechanism allowing thereby transport of the load platform and the cargo. The translifter may sometimes be called as a lift trailer. The translifter may be moved by pulling or towing it by means of a separate hauling vehicle.

According to an embodiment, a load platform is intended for supporting cargo, such as shipping containers, paper and steel reels, machines etc. on its upper surface. The load platform may be a cassette which is a wheelless steel platform. Cassettes are typically used in ro-ro and other terminals and ports. Other type of load platforms are A-trestles and U-trestles, for examples. Further examples of load platforms are tipping cassettes.

According to an embodiment, a hauling vehicle for moving the translifter may be a towing tractor, terminal tractor, yard truck, truck, fork-lift truck or other work machine provided with a suitable coupling means.

According to an embodiment, the draw bar is connected to the chassis fixedly, i.e. without using any movable joints. This means that, the draw bar is immovable in relation to the chassis during the operation of the translifter. The draw bar may be locked to the chassis by means of screw fastening, whereby it is possible to change the draw bar if needed. Alternatively, the draw bar may be connected to the chassis by means of weld joints.

According to an embodiment, the disclosed translifter is provided with an independent load sensing system comprising several load sensing devices mounted on-board the translifter. In other words, the disclosed load sensing arrangement is independently operable and requires no sensing data from the hauling vehicle or any external sensing device. This way the hauling device may be without any load sensing device, or the load sensing sensor and systems of the translifter and the hauling device need not be compatible.

According to an embodiment, the disclosed translifter is provided with one or more on-board control units configured to receive sensing data from the load sensing devices on-board the translifter. The control unit is provided with a weighting program executable in processor of the control unit. The program is configured to calculate the load of the cargo in response to the received load sensing data. In this solution the sensing and processing of the sensing data can be done independently in the translifter.

According to an embodiment, the calculated weight of the cargo may be stored in a memory device arranged in connection with the on-board control unit.

According to an embodiment, the determined weight may be communicated to the hauling device when the translifter is connected to the hauling device. It is possible to communicate the data to the hauling vehicle in advance too. The data communication may be wireless and may be based on radio signals and near range information technologies, for example. If there are cables between the translifter and the hauling vehicle, the data communication may be wired data communication.

According to an embodiment, the control unit is configured to detect weight balance of the cargo on the translifter. The weight balance data or weight distribution data may be communicated to the hauling device and its operator.

According to an embodiment, the control unit is in data communication connection with a control or management system of a work site where the translifter is operating. In other words, the control unit may communicate with a control and management system of a port, terminal or production plant.

According to an embodiment, the sensing data of the mentioned load sensing devices of the translifter is transmitted to at least one external control unit wherein the load of the cargo is calculated. In this solution the sensing data is processed either entirely or at least partly outside the translifter.

According to an embodiment, the sensing data may be transmitted via a wireless data communication connection. Then, the translifter may comprise a wireless data communication device for transmitting the gathered load sensing data to one or more external processing apparatuses or storage means. The load sensing devices of the translifter may comprise dedicated data transmitters or there may be one common device for executing the data transmission.

According to an embodiment, the external control unit may be a server, a cloud service, a computer or an electrical terminal device. The external control device may comprise data processing means, and data storage means. The external control unit may be located at any suitable place.

According to an embodiment, the external control unit may be located on a hauling vehicle.

According to an embodiment, the gathered sensing data and processed sensing data may or may not be stored to a memory device. The data may be presented for an operator of a hauling vehicle when cargo is loaded and during the transport.

According to an embodiment, the mentioned at least two load sensing devices are located at opposite end portions of the translifter. It is typically advantageous for the load sensing process if the load sensing devices are located as long distance from each other as possible.

According to an embodiment, the translifter comprises at least one first load sensing device and at least one second load sensing device. The mentioned at least one first load sensing device is arranged at the first end part of the translifter. The mentioned at least one second load sensing device is located at longitudinal distance towards the second end of the translifter in relation to the location of the first load sensing device. As an example, the second load sensing device may be located somewhere between a longitudinal centre point of the chassis and a coupling device which is located at an outermost end of a draw bar.

According to an embodiment, the mentioned draw bar is provided with the at least one second load sensing device. The draw bar is located at the hauling vehicle side of the translifter and support forces are transmitted via it. One or more sensors may be mounted on flank surfaces of the draw bar. Alternatively, the sensor may be mounted on its top or bottom surface. It is also possible to mount one or more second sensing devices or sensors to inner structure of the draw bar. Then the sensors may be well protected. Inner surfaces, beams, bars, fastening elements and other structural elements inside the draw bar may be provided with the sensors. In fact, any surface of the draw bar may serve as a potential mounting point for the second sensor.

According to an embodiment, the at least one second load sensing device is mounted to the chassis of the translifter.

According to an embodiment, the load sensing devices may be mounted directly to the chassis.

According to an embodiment, the chassis may be formed of several longitudinal frame beams which may be provided with the load sensing devices.

According to an embodiment, the one or more first load sensors and the one or more second load sensors are located on opposite sides of the centre of gravity of the cargo. The sensors are located also at longitudinal distances from the centre of gravity of the cargo, which is beneficial for accuracy of the sensing.

According to an embodiment, an upper surface of the chassis is provided with a predetermined cargo position on which the cargo is to be positioned. A central longitudinal point of the mentioned cargo position is a nominal centre of gravity of the cargo (NGC). The at least one second load sensing device is located between the mentioned nominal centre of gravity of the cargo (NCG) and the coupling device which is located at the outer end of the draw bar. This way the first load sensors and the second load sensors are always located on opposite sides of the nominal centre of gravity of the cargo.

According to an embodiment, the above mentioned predetermined cargo position may be marked on the upper surface of the chassis or the chassis may be provided with support or guide elements facilitating positioning the cargo to the right place on the translifter.

According to an embodiment, at a distal end portion of the draw bar is a coupling device for coupling the translifter removably to the hauling vehicle. The at least one second load sensing device is located in connection with the coupling device. In other words, the load sensing is executed as close to the hauling vehicle as possible but still independently of the hauling vehicle. In this embodiment the chassis needs not to be provided with the second load sensing sensors.

According to an embodiment, the coupling device comprises a projecting element. The at least one second load sensing device is located in the mentioned projecting element or in its mounting elements.

According to an embodiment, the coupling device comprises a ball joint element. The at least one second load sensing device is located in connection with the mentioned ball joint element or in its mounting elements.

According to an embodiment, the coupling device comprises a king pin assembly mountable to a fifth wheel of the hauling vehicle. The at least one second load sensing device is located in connection with the mentioned king pin assembly.

According to an embodiment, the king pin assembly comprises a substantially vertical king pin facing downwards and a slide plate surrounding the king pin.

According to an embodiment, the king pin assembly itself comprises at least one second load sensing device or sensor.

According to an embodiment, the at least one second load sensing device or sensor is located at a mounting point of the king pin assembly, i.e. between the king pin assembly and a fastening surface of the chassis.

According to an embodiment, the draw bar comprises a gooseneck. In other words, the second end of the chassis of the translifter is provided with curved projecting part, wherein the curved shape resembles a neck of a goose. A distal end portion of the gooseneck is provided with a coupling device connectable to the hauling vehicle. The mentioned gooseneck is provided with the at least one second load sensing device.

According to an embodiment, the gooseneck or the coupling device is provided with the at least one second load sensing device.

According to an embodiment, the gooseneck is immovable relative to the chassis. Thus, the gooseneck has firm fastening and does not move during the use.

According to an embodiment, the gooseneck is a fixed part of the chassis.

According to an embodiment, the gooseneck is a removable part of the chassis. Further, the chassis may be submitted to the user together with two interchangeable goosenecks each of them provided with the one or more second load sensing devices.

According to an embodiment, the load sensing device comprises at least one force sensor, such as strain gauge, load cell or electrical load sensor. In other words, loadings directed to fixed structures of the translifter can be detected and the sensing data can be converted into weight data. The load sensors can sense forces and strains subjected to monitored objects.

According to an embodiment, the load sensors may be configured to detect structural loadings based on optical measurement techniques, such as laser measuring devices. Optical measuring devices can be used to detect dimensional changes and changes in shapes and angles.

According to an embodiment, the utilized sensors may be ultrasonic sensors, inductive sensors, capacitive sensors, fiber-optic sensors and magnetic sensors. The mentioned sensors can be utilized for sensing dimensions, distances and angles, for example.

According to an embodiment, the load sensing device comprises a pressure sensor for sensing pressure of pressurized fluid. Thus, different pneumatic and hydraulic sensors may be utilized in the load sensing.

According to an embodiment, the lifting mechanism of the translifter comprises at least one hydraulic cylinder and the first load sensing device is a pressure sensor configured to sense hydraulic pressure of the cylinder.

According to an embodiment, the load sensing device comprises a sensing unit and sensing head between which is a data communication path, such as a cable. Location of the sensing head or element determines the location of the sensor since this is where the actual load sensing is executed. The sensing unit may comprise assisting devices and instruments for the sensing. The sensing unit may comprise a data communication device or memory device, for example.

According to an embodiment, the first load sensing device is mounted in connection with a suspension system of wheels or bogies. Then the first sensing device may be a force sensor, for example.

According to an embodiment, the disclosed solution relates to a method for determining load of cargo carried on a translifter. The method comprises providing the translifter with at least two load sensing devices on opposite sides in relation to a centre of gravity of the cargo. In other words, the centre of gravity of the cargo settles always between the load sensors. The load of the cargo is determined in response to sensing data received only from the load sensing devices of the translifter.

According to an embodiment, the disclosed solution comprises providing opposite end portions of the translifter with at least one load sensing device and sensing the loadings at both end portions.

According to an embodiment, the method comprises: driving a wheeled chassis of the translifter under at least one load platform supporting the cargo; lifting the at least one load platform and the cargo with a lifting mechanism of the translifter; carrying the load platform and the cargo on the lifted chassis of the translifter; moving the translifter by means of a separate hauling vehicle connected to a draw bar of the translifter; and sensing load of the cargo transported on the translifter by means of at least one first load sensing device mounted to the lifting mechanism at a first end part of the chassis and by means of at least one second load sensing device mounted to the draw bar located at a second end part of the chassis.

According to an embodiment, the disclosed solution comprises transmitting the gathered load data from the translifter at least to a hauling vehicle connected to the translifter. The hauling vehicle may be provided with a control unit which may utilize the received data on load of the cargo in different ways. The control unit of the hauling vehicle may check that the weight of the cargo is within set weight limits and may record the weight of the transported cargo. The control unit may also indicate the weight for an operator.

According to an embodiment, the disclosed solution comprises displaying the determined load data on a display device of the hauling vehicle for an operator.

According to an embodiment, the disclosed solution comprises a tare weight system. Weight of used load platforms are known and can be taken care of automatically by means of a weigh calculation program. Alternatively, weight of the load platforms is sensed when no cargo is on them, whereby tare weight can be determined.

The above disclosed embodiments and features may be combined in order to form suitable solutions that are needed.

### Brief description of the figures

Some embodiments are described in more detail in the accompanying drawings, in which
Figure 1 is a schematic side view of a translifter connected to a hauling vehicle and provided with load sensing means,
Figure 2 is a schematic side view of another translifter and possible mounting positions of load sensing devices,
Figure 3 is a schematic side view of a translifter and its sensor arrangement,
Figures 4 - 6 are schematic side views of second end parts of translifters comprising different mounting positions for load sensing devices,
Figure 7 shows schematically an embodiment wherein a translifter is provided with a fully independent on-board load sensing and processing system,
Figure 8 shows schematically an embodiment wherein a translifter is provided with an on-board sensing system communicating either directly or via a portable memory device with an external processing system,
Figure 9 is a schematic diagram showing some possible mounting points for a second sensor,
Figure 10 is a schematic diagram of some suitable sensing techniques for the load sensing,
Figure 11 is a schematic diagram showing some sensors which may be implemented in the disclosed solution, and
Figure 12 is a schematic presentation of a solution wherein a load sensing device comprises a sensing head and sensing unit.

For the sake of clarity, the figures show some embodiments of the disclosed solution in a simplified manner. In the figures, like reference numerals identify like elements.

### Detailed description of some embodiments

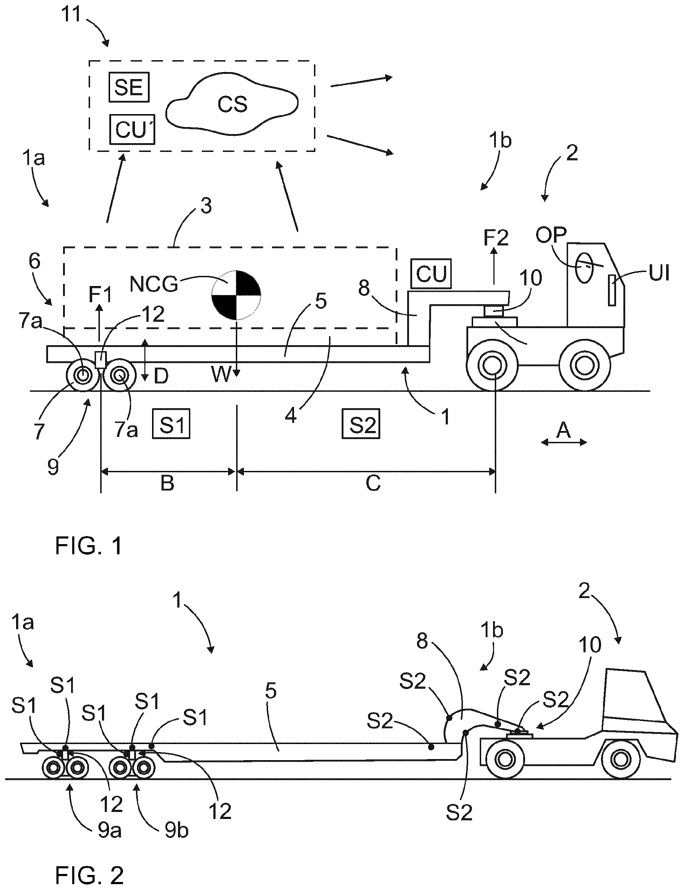

Figure 1 discloses a translifter 1 movable by means of a hauling vehicle 2. The translifter 1 is designed for transporting cargo 3 for a relative short transport distances at limited work sites, such as at ports, terminals and production plants. It is not intended for highway use.

The cargo 3 is transported together with a load platform 4, such as a cassette, whereby the translifter 1 and the hauling vehicle 2 form together a self-loading transport system. The cargo 3 may be a shipping container loaded on the cassette by means of a crane or straddle carrier, for example. The translifter 1 comprises a chassis 5 a top surface of which is intended for supporting the cargo 3. The chassis 5 may be provided with a predetermined cargo position 6 for determining position of the transported cargo in longitudinal direction A of the translifter 1. At a longitudinal centre position of this cargo position 6 may be a nominal centre of gravity NCG of the cargo 3. Weight W of the cargo and the load platform 4 is directed to the translifter 1 whereby support forces F1 and F2 are generated by the translifter 1.

Structure of the translifter 1 comprises the chassis 5 comprising at least one axle 7a with wheels 7 at its first end portion 1a and a draw bar 8 at its opposite second end portion 1b. Typically there is one or two boogie arrangements 9 comprising several axles 7a and wheels 7 at the first end portion 1a. Between the boogie 9 and the chassis 5 may be a lifting device 12 for lifting the first end part 1a of the translifter 1 in vertical direction D. At a distal end portion of the draw bar 8 is a coupling device 10 allowing the translifter 1 to be connected removably to the hauling vehicle 2. The coupling device 10 may be a ball coupling element, a king pin element or any other quick coupling element suitable for the purpose. The draw bar 8 may be mounted to the chassis 5 immovably.

The weight W of the cargo 3 sensed by means of two or more sensing devices S1, S2 mounted at a distance from each other in the longitudinal direction A. One or more first load sensing devices S1 or sensors may be mounted on a first side in relation to the nominal centre point of gravity NCG, and correspondingly, one or more second load sensing devices S2 or sensors may be mounted on a second side in relation to the nominal centre point of gravity NCG. Thus, the first sensor S1 is located at a first portion B and the second sensor S2 is located at a second portion C between the nominal centre point of gravity NCG and the coupling device 10.

Sensing data produced by the load sensing devices S1, S2 may be transmitted to an on-board control CU wherein load of the cargo 3 is determined or calculated. Alternatively, or in addition to, the sensing data may be transmitted to external control devices 11 wherein the data is processed. The external control device 11 may comprise a cloud data service CS, server S, control unit CU' or other electrical devices. The on-board control unit CU and the external control device 11 may transmit the processed data and data packages to the hauling vehicle wherein data may be displayed for an operator OP by means of a user interface UI, such as a display device.

Figure 2 discloses by means of black dots several possible mounting positions of first load sensing devices S1 and second load sensing devices S2. The first sensing device S1 which is located at a first end part 1a of the translifter 1 may be mounted in connection with boogies 9a, 9b or lifting mechanism 12. The first sensor S1 may also be mounted directly to frame beams or corresponding structural elements of the chassis 5. The second sensor S2 is located at a second end portion 1b of the translifter 1 may be mounted in connection with a draw bar 8 or a coupling device 10. The second sensor S2 may also be mounted directly to frame beams or corresponding structural elements of the chassis 5.

Number of the sensors S1 as well as number of the sensors S2 may be one, two, three or even more. Locations of the sensors S1 and S2 are known and the location data can be input to a control device which is configured to execute processing of the sensing data.

As can be seen in Figures 1 and 2, the hauling vehicle 2 may be without any load sensing devices S1, S2.

As can be seen in Figures 1 and 2, the hauling vehicle 2 may be without any control unit for receiving and processing load sensing data. Thus, the hauling vehicle 2 may be without any means relating to the detection of load of cargo. The hauling vehicle 2 may simply be provided with load data processed elsewhere.

Further, number of boogies 9 may be one, two, three or even more and they may be provided with dedicated lifting devices 12 provided with sensors S2, or alternatively, there may be a common sensor S2 for several boogies 9.

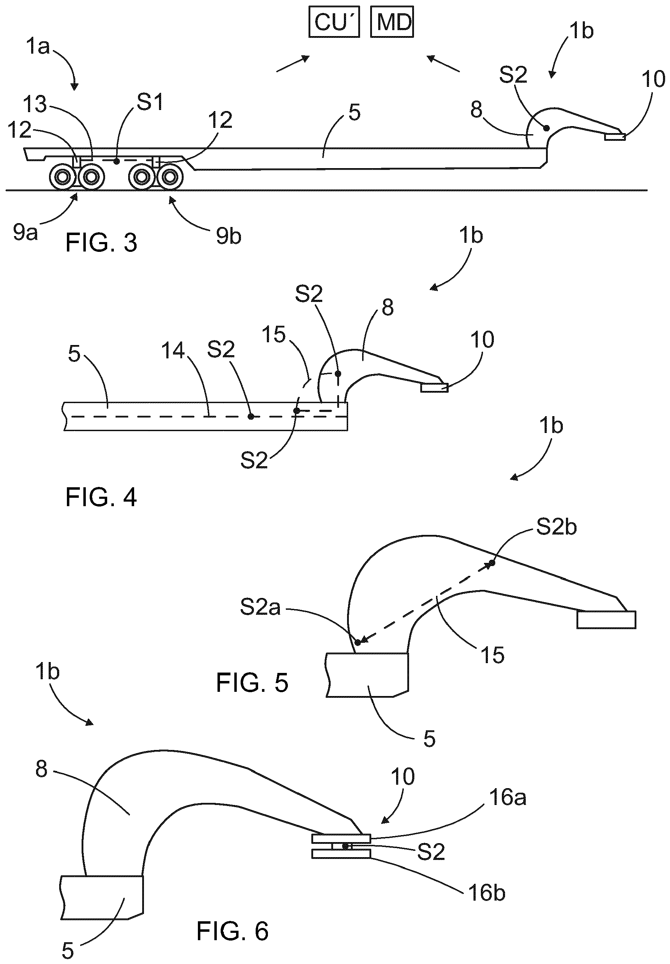

Figure 3 discloses a translifter 1 and sensors S1 and S2 mounted on its opposite end portions 1a, 1b. The first sensing device S1 may be mounted to hydraulic pressure line 13 connecting hydraulic lifting devices 12. Same hydraulic pressure may prevail in cylinders of the lifting mechanism. Number of the cylinders or corresponding lifting elements 12 is known by the load sensing system and can be taken into consideration in the load calculation. Figure 3 further discloses that the second load sensing device S2 may be mounted to a draw bar 8. The sensor S2 may be mounted to a flank surface of the draw bar 8. The draw bar 8 may be a so called gooseneck shape of which resembles curved shape of a goose.

The sensing data of the sensors S1 and S2 may be transmitted to an external control unit CU' to be processed. Alternatively, or in addition to, the sensing data may be stored to a memory device MD and can be read and processed at any time.

Figure 4 discloses that a second load sensing device S2 may be mounted to a frame beam 14 or corresponding frame element of a chassis 5. Alternatively, or in addition to, there may be sensors S2 for sensing angular position 15 between the chassis 5 and a draw bar 8, whereby possible changes in their connection and structure can be determined.

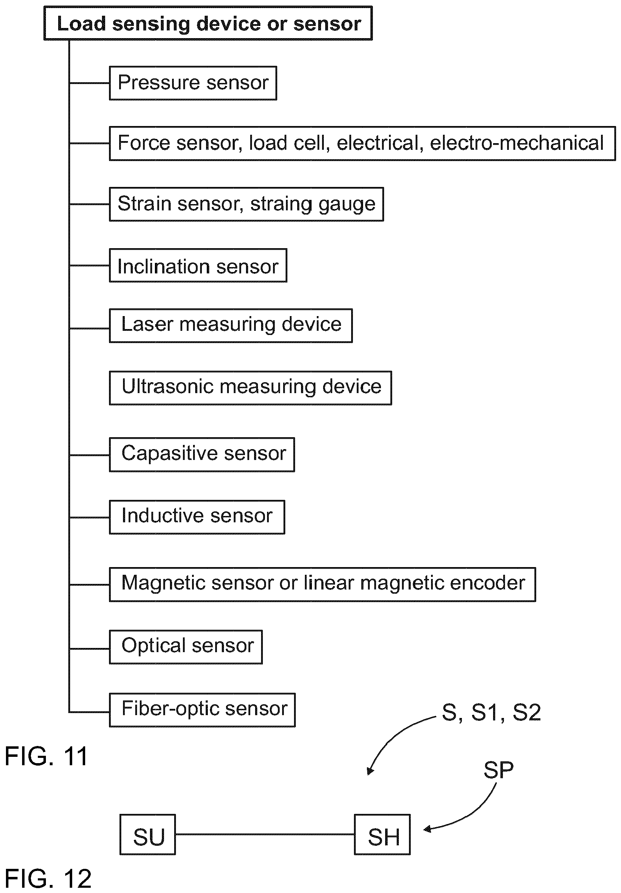

Figure 5 discloses a sensing arrangement wherein second sensor components S2a and S2b comprises transmitters and receivers. The second sensor components S2a, S2b can sense changes in distance 15 between them. The sensing data correlates to changes in shape of a gooseneck shaped draw bar 8 and can be converted into load data in a control unit. The sensors S2a, S2b may be any kind of sensors capable of sending and receiving sensing measuring signals. Suitable sensor types are disclosed later in Figure 11, for example.

In Figure 5 the sensor component S2b may alternatively comprise a reflector or a reference point whereby changes in distance between the sensor components S2a and S2b can be detected when the draw bar is subjected to loadings.

Figure 6 discloses a sensing arrangement wherein a coupling device 10 is provided with a second load sensing device S2. The coupling device 10 may comprise components 16a, 16b which are movable relative to each other when the coupling device 10 is under loading, and the sensor S2 is configured detect the movement. There may be a hydraulic actuator configured to resist movement of the components 16a, 16b and the second sensor S2 may be pressure sensor. Alternatively, or in addition to there may be a second sensor S2 for sensing support forces directed towards a coupling point of a hauling vehicle.

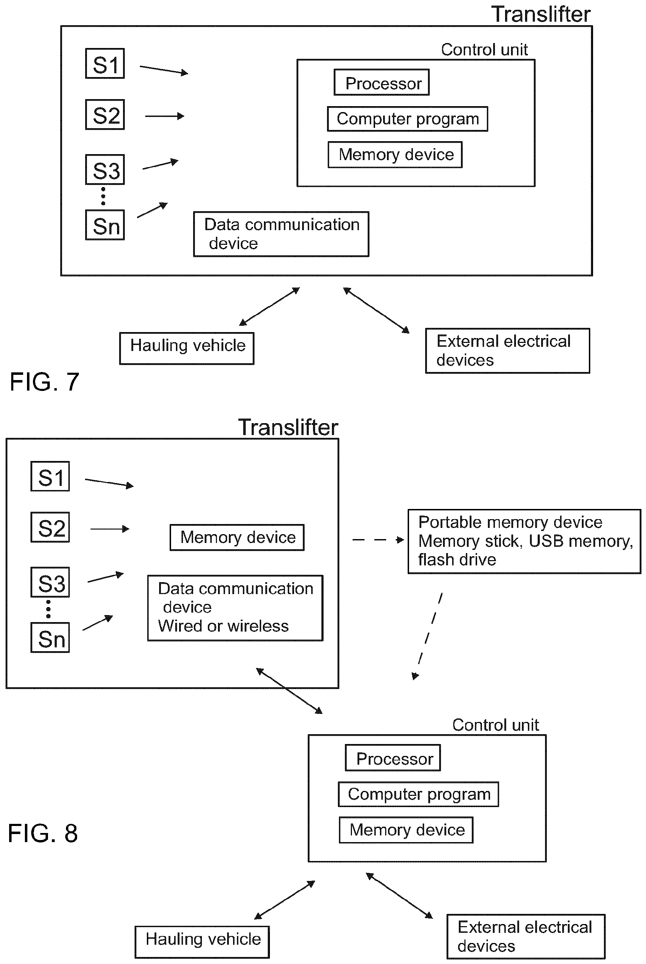

In Figure 7 a translifter is provided with a fully independent on-board load sensing system. Sensing data is transmitted from sensors S1 - Sn to an on-board control unit which is provided with a processor, a computer program and a memory device for processing the sensing data. The system further comprises a data communication device for communicating the processed load data to a hauling device and possibly to one or more external electrical devices through a wireless or wired data transmission path.

Figure 8 discloses a solution which differs from the one shown in Figure 7 in that a translifter is without on-board control unit. Thus, the disclosed translifter is provided with an on-board sensing system communicating with an external processing system. Sensing data produced by sensors S1 - Sn can be transmitted to the external control unit or can be stored to a portable memory device and can be unloaded from it to the external processing system when so desired.

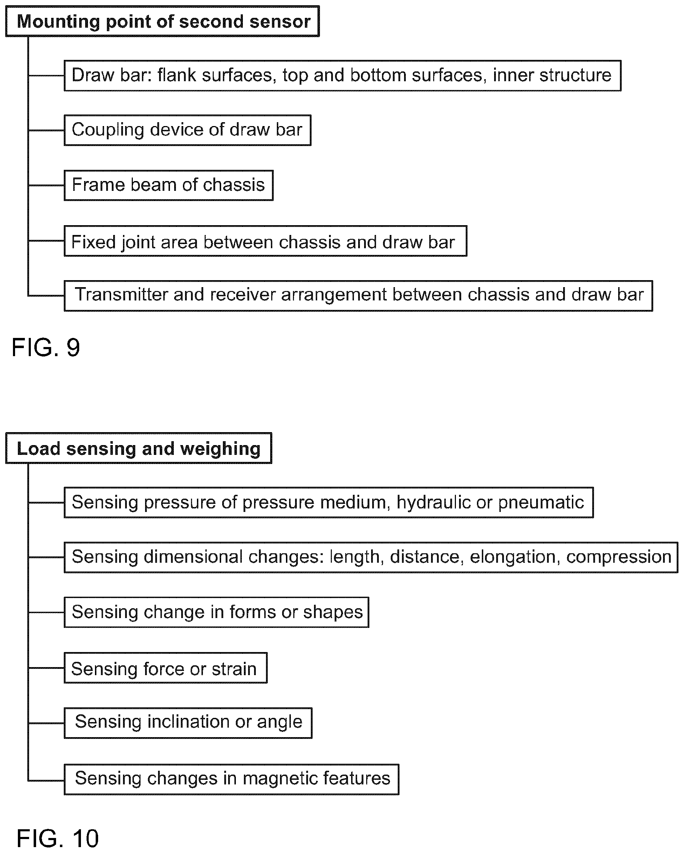

Features disclosed in Figures 9, 10 and 11 have already been disclosed above in this document. Further, details disclosed in the Figures are self-explanatory on the basis of the Figures wherefore there is no need to explain them in more detailed in the specification.

Let it be further mentioned that one or more second load sensing devices S2 may be mounted anywhere between the first end of the chassis and the coupling device. Thus, the sensor S2 may be located as it is described above in this document, and alternatively between the first end and the boogies of the chassis. Further, positions of the sensors S1 and S2 may be at any suitable position on the translifter and they are positioned so that there exists the mentioned longitudinal distance between them. Positions of the sensors may be determined on the basis of the design of the translifter, handled cargo, used sensors and needed sensing accuracy, for example.

Figure 12 discloses a principle of a load sensing device or sensor S, S1, S2, which may comprise a sensing head SH mounted at a desired and suitable sensing point SP and a sensing unit SU mounted elsewhere. In this case the location of the sensor is considered to be the location of the sensing head i.e. the sensing point SP. Between the sensing head SH and the sensing unit SU is a wired or wireless data communication connection.

The drawings and the related description are only intended to illustrate the idea of the invention. In its details, the invention may vary within the scope of the claims.

## Claims

1. A translifter (1) for transporting cargo (3), wherein the translifter (1) comprises:
a chassis (5);
at least one axle (7a) at a first end part (1a) of the chassis (5), wherein the axle (7a) is provided with wheels (7);
a lifting mechanism (12) configured to lift the chassis (5) vertically (D) in relation to the axle (7a);
a draw bar (8) fixedly connected to a second end part (1b) of the chassis (5) for connecting the translifter (1) to a hauling vehicle (2);
and at least one load sensing device (S) for sensing load of the cargo (3) transported on the translifter (1);
**characterized in that**
the translifter (1) is provided with an independent load sensing system comprising several load sensing devices (S1, S2) mounted on-board the translifter (1) and at a distance from each other in longitudinal (A) distance of the translifter (1).

2. The translifter as claimed in claim 1, **characterized in that**
the translifter (1) is provided with at least one on-board control unit (CU) configured to receive sensing data from the load sensing devices (S1, S2); and
the control unit (CU) is provided with a weighting program executable in processor of the control unit (CU, CU') and configured to calculate the load of the cargo (3) in response to the received load sensing data.

3. The translifter as claimed in claim 1, **characterized in that**
the sensing data of the mentioned load sensing devices (S1, S2) is transmitted to at least one external control unit (CU') wherein the load of the cargo (3) is calculated.

4. The translifter as claimed in any one of the preceding claims 1 - 3, **characterized in that**
the at least two load sensing devices (S1, S2) are located at opposite end portions (1a, 1b) of the translifter (1) .

5. The translifter as claimed in any one of the preceding claims 1 - 3, **characterized in that**
at least one first load sensing device (S1) is arranged at the first end part (1a) of the translifter (1);
at least one second load sensing device (S2) is located at longitudinal (A) distance towards the second end (1b) of the translifter (1) in relation to the location of the first load sensing device (S1).

6. The translifter as claimed in any one of the preceding claims 1 - 5, **characterized in that**
the mentioned draw bar (8) is provided with the at least one second load sensing device (S2).

7. The translifter as claimed in any one of the preceding claims 1 - 6, **characterized in that**
the at least one second load sensing device (S2) is mounted to the chassis (5) of the translifter (1).

8. The translifter as claimed in any one of the preceding claims 1 - 7, **characterized in that**
an upper surface of the chassis is provided with a predetermined cargo position (6) on which the cargo (3) is to be positioned and a central point of the mentioned cargo position is a nominal centre of gravity of the cargo (NGC);
and the at least one second load sensing device (S2) is located between the mentioned nominal centre of gravity of the cargo (NCG) and a coupling device (10) which is located at distal end of the draw bar (8).

9. The translifter as claimed in any one of the preceding claims 1 - 8, **characterized in that**
at a distal end portion of the draw bar (8) is a coupling device (10) for coupling the translifter (1) removably to the hauling vehicle (2); and
the at least one second load sensing device (S2) is located in connection with the coupling device (10).

10. The translifter as claimed in any one of the preceding claims 1 - 9, **characterized in that**
the draw bar (8) comprises a gooseneck a distal end portion of which is provided with a coupling device (10) connectable to the hauling vehicle (2); and
the mentioned gooseneck is provided with the at least one second load sensing device (S2).

11. A method for determining load of cargo (3) carried on a translifter (1);
wherein the load of the cargo (3) is determined by means of at least one load sensing device (S) of the translifter (1);
**characterized by**
providing the translifter (1) with at least two load sensing devices (S1, S2) on opposite sides in relation to a centre of gravity of the cargo (3); and
determining the load of the cargo (3) in response to sensing data received only from the load sensing devices (S1, S2) of the translifter (1).

12. The method as claimed in claim 11, **characterized by**
driving a wheeled chassis (5) of the translifter (1) under at least one load platform (4) supporting the cargo (3);
lifting the at least one load platform (4) and the cargo (3) with a lifting mechanism (12) of the translifter (1) ;
carrying the load platform (4) and the cargo (3) on the lifted chassis (5) of the translifter (1);
moving the translifter (1) by means of a separate hauling vehicle (2) connected to a draw bar (8) of the translifter (1); and
sensing load of the cargo (3) transported on the translifter (1) by means of at least one first load sensing device (S1) mounted to the lifting mechanism (12) at a first end part (1a) of the translifter (1) and by means of at least one second load sensing device (S2) mounted to the draw bar (8) located at a second end part (1b) of the translifter (1).

13. The method as claimed in claim 11 or 12, **characterized by**
transmitting the gathered load data from the translifter (1) at least to the hauling vehicle (2) connected to the translifter (1).
